# EUROPEAN PATENT APPLICATION

(11) **EP 1 990 996 A1**
(43) Date of publication of application: **12.11.2008**
(21) Application number: 07737509.5
(22) Date of filing: 28.02.2007
(51) Int. Cl.: H04N 5/765, H04N 5/93, H04N 7/173

(54) **INFORMATION REPRODUCING DEVICE, INFORMATION REPRODUCING METHOD, INFORMATION REPRODUCING PROGRAM AND RECORDING MEDIUM**

(30) Priority: 01.03.2006 JP 2006054956
(71) Applicant: Pioneer Corporation, Tokyo 153-8654 (JP)
(72) Inventor: UCHIYAMA, Kazuhiko, Kawagoe-shi, Saitama 350-8555 (JP)
(74) Representative: Haley, Stephen
(86) International application number: PCT/JP2007/053781
(87) International publication number: WO 2007/100004

(57) **Abstract**

A receiving unit (101) receives a video image signal, an audio signal, and a title of a program of a broadcast wave. An input unit (103) is input with a video image signal, an audio signal, and a title of a given recording stored on a recording medium. A comparing unit (104) compares the title of the program with the title stored in the recording medium to determine whether the titles are identical. When a comparison result by the comparing unit (104) indicates that the titles are identical, a selecting unit (105) selects a high quality video image signal and a high quality audio signal respectively from among the video image signal and the audio signal received by the receiving unit (101) and the video image signal and the audio signal input into the input unit (103). A synchronization control unit (106) synchronizes the video image signal and the audio signal selected by the selecting unit.

## Description

### TECHNICAL FIELD

The present invention relates to an information reproducing apparatus, an information reproducing method, information reproducing program, and a recording medium that reproduce video image and audio information.

### BACKGROUND ART

Conventionally, various programs, etc., can be viewed through a receiving apparatus that receives broadcast waves. Recently, programs including movies, etc., can be further received and reproduced with a high quality due to the prevalence of digital broadcasting (see, for example, the following Patent Document 1). In an example of digital broadcasting, though the video image thereof has a high definition image quality (HDTV), which is of a high quality, the audio thereof employs AAC (Advanced Audio Coding), etc., which is of a somewhat low quality.

A user who receives broadcast waves may already have a medium (for example, a DVD) having a recording that is identical to one of the programs above such as a movie, etc. Compared with the digital broadcast above, though a DVD has a video image quality that is equivalent to the standard (SDTV) image quality, which is low, the DVD has audio that employs PCM, DTS (a registered trademark), Dolby (a registered trademark) Digital (DD)-EX, etc., having a high quality.

Patent Document 1: Japanese Patent Application Laid-Open Publication No. 2003-70018

### DISCLOSURE OF INVENTION

### PROBLEM TO BE SOLVED BY THE INVENTION

Although a conventional information reproducing apparatus can play a received digital broadcast program having a high video image quality, the apparatus can only play the program with the quality of the received audio thereof. Therefore, for example, a problem exists in that the reproduction of high quality sound is not possible.

On the contrary, in an example of playing a recording on a DVD, though the apparatus can reproduce the audio thereof with a high quality, the apparatus can only reproduce the video image with the quality that is stored on the DVD. Therefore, for example, a problem exists in that the reproduction of a high quality video image is not possible.

### MEANS FOR SOLVING PROBLEM

To solve the problems above and achieve an object, an information reproducing apparatus according to the invention of claim 1 includes a receiving unit that receives a video image signal, an audio signal, and a title of a program of a broadcast wave; an input unit that is input with a video image signal, an audio signal, and a title of a recording stored on a recording medium; a comparing unit that compares the title of the program with the title of the recording to determine whether the title of the program and the title of the recording are identical; a selecting unit that, when a comparison result by the comparing unit indicates that the title of the program and the title of the recording are identical, respectively selects a video image signal of a high quality and an audio signal of a high quality from among the video image signal and the audio signal received by the receiving unit and the video image signal and the audio signal input to the input unit; and a synchronization control unit that synchronizes the video image signal and the audio signal selected by the selecting unit.

An information reproducing method according to the invention of claim 4 includes a receiving step of receiving a video image signal, an audio signal, and a title of a program of a broadcast wave; an inputting step of inputting a video image signal, an audio signal, and a title of a recording stored on a recording medium; a comparing step of comparing the title of the program with the title of the recording to determine whether the title of the program and the title of the recording are identical; a selecting step of respectively selecting, when a comparison result at the comparing step indicates that the title of the program and the title of the recording are identical, a video image signal of a high quality and an audio signal of a high quality from among the video image signal and the audio signal received at the receiving step and the video image signal and the audio signal input at the inputting step; and a synchronization control step of synchronizing the video image signal and the audio signal selected at the selecting step.

An information reproducing computer-program according to the invention of claim 5 causes a computer to execute the information reproducing method according to claim 4.

A computer-readable recording medium according to the invention of claim 6 stores therein the information reproducing computer-program according to claim 5.

### BRIEF DESCRIPTION OF DRAWINGS

Fig. 1 is a block diagram of an information reproducing apparatus according to an embodiment of the present invention;
Fig. 2 is a flowchart of processes of the information reproducing apparatus according to the embodiment of the present invention;
Fig. 3 is a block diagram of an information reproducing apparatus according to an example of the present invention;
Fig. 4 is a block diagram of the entire configuration of an information reproducing system including an information reproducing apparatus;
Fig. 5 is flowchart (Part 1) of processes of the information reproducing apparatus according to the example of the present invention; and
Fig. 6 is flowchart (Part 2) of the processes of the information reproducing apparatus according to the example of the present invention.

### EXPLANATIONS OF LETTERS OR NUMERALS

- 100: information reproducing apparatus
- 101: receiving unit
- 102: accumulating unit
- 103: input unit
- 104: comparing unit
- 105: selecting unit
- 106: synchronization control unit

### BEST MODE(S) FOR CARRYING OUT THE INVENTION

With reference to the accompanying drawings, description is given in detail below for a preferred embodiment of an information reproducing apparatus, an information reproducing method, information reproducing program, and a recording medium according to the present invention.

### (Embodiment)

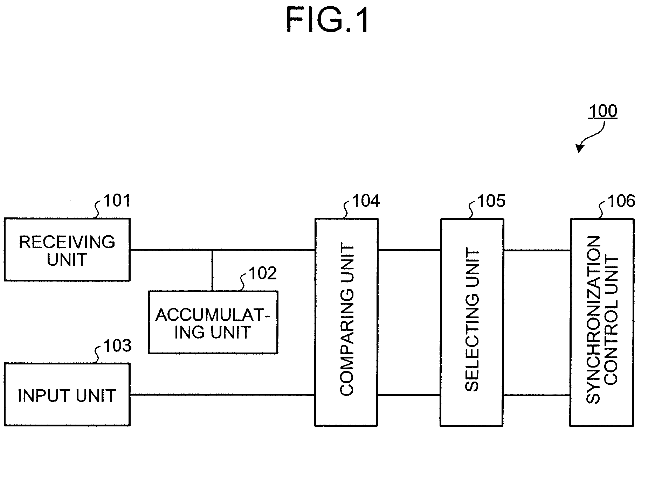

Fig. 1 is a block diagram of an information reproducing apparatus according to the embodiment of the present invention. This information reproducing apparatus 100 includes a receiving unit 101, an accumulating unit 102, an input unit 103, a comparing unit 104, a selecting unit 105, and a synchronization control unit 106.

The receiving unit 101 receives a digital broadcast wave such as that of a terrestrial digital broadcast and outputs a video image signal and a sound signal of a broadcasted program together with the title of the broadcasted program. The video image signal and the audio signal of the program are accumulated in the accumulating unit 102. The accumulating unit 102 is adapted to accumulate the video image signal, the audio signal, and the title of the program.

The input unit 103 is input with the video image signal, the audio signal and information concerning the video image signal and the audio signal. The input unit 103 is connected to, for example, a DVD player that plays a DVD, which is a recording medium having a video image signal and an audio signal recorded thereon. The input unit 103 is input with a title, a video image signal, and an audio signal of a recording played by the DVD player. The recording medium is not limited to a DVD and may be another recording medium having a video image signal and an audio signal recorded thereon. The shape of the recording medium is not limited to a disc.

The comparing unit 104 compares the contents of the program of the digital broadcast accumulated in the receiving unit 101 or the accumulating unit 102 with the contents of the recording stored on the DVD, which is a recording medium, to determine whether the contents are identical. The comparing unit 104 further has a function of detecting the quality of the video image signal and the audio signal of the program of the digital broadcast and that of the recording on the DVD, respectively. The comparing unit 104 can, for example, detect information concerning the quality from the data format of the video image signal and the audio signal.

The selecting unit 105 is input with the video image signal and the audio signal of the program of the digital broadcast, and the video image signal and the audio signal of the recording on the DVD. The selecting unit 105 selects and outputs a video image signal and an audio signal based on the comparison result of the comparing unit 104. Specifically, because the contents of the program of the digital broadcast and the contents of the recording stored on the DVD are identical when the result of the comparison by the comparing unit 104 indicates that the contents coincide, the selecting unit 105 can combine and play the contents of the program of the digital broadcast and the contents of the recording stored on the DVD.

The selecting unit 105 selects and outputs the signal with the higher quality among the input video image signal and the input audio signal, based on the result of the quality detection by the comparing unit 104. At present, generally, the video image signal of a digital broadcast has a higher quality than that of the video image signal of a DVD and therefore, the video image signal of digital broadcast is selected. Similarly, the audio signal of the DVD is selected because the audio signal of the DVD has a higher quality than that of the audio signal of a digital broadcast.

Because the contents of the program of the digital broadcast and the contents of the recording stored on the DVD are not identical when the result of the comparison by the comparing unit 104 indicates that the contents do not coincide, selection involving the combining of the contents of the program of the digital broadcast and the contents of the recording stored on the DVD is not executed. In this case, only the video image signal and the audio signal of the digital broadcast are selected. Further, only the video image signal and the audio signal of the recording stored in the DVD may be selected.

The synchronization control unit 106 executes video frame synchronization of the video image signal selected by the selecting unit 105. When the video image signal and the audio signal selected by the selecting unit 105 are respectively from different input systems, the synchronization control unit 106 synchronizes the video image signal and the audio signal. For example, when the signals selected by the selecting unit 105 are the video image signal of the digital broadcast and the audio signal of the DVD, the synchronization control unit 106 synchronizes the video image signal and the audio signal respectively from the different input systems with each other to prevent a reproduction of the video image and sound that seems to be unnatural.

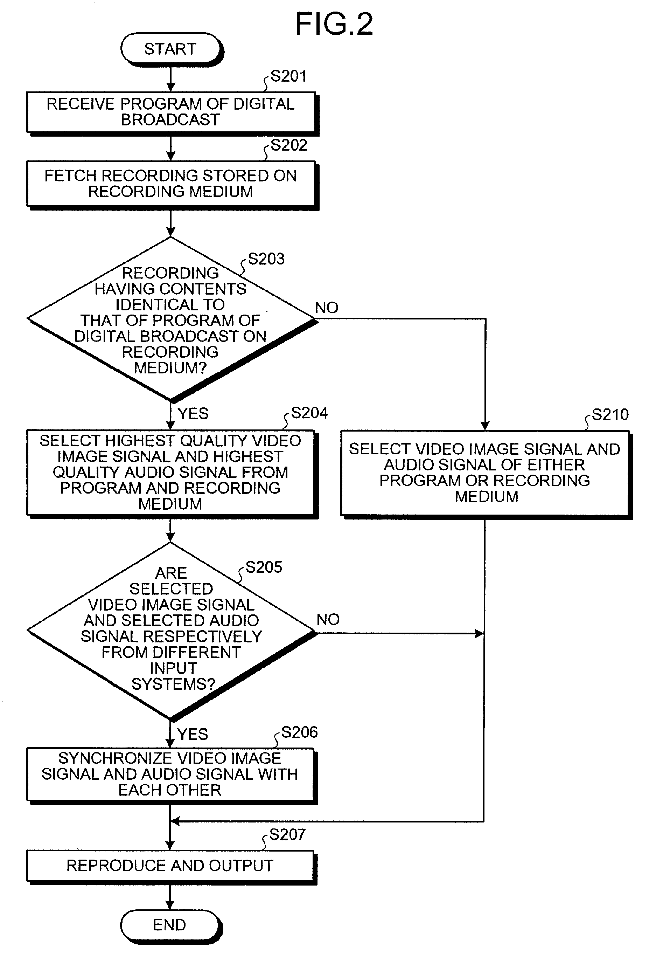

Fig. 2 is a flowchart of processes of the information reproducing apparatus according to the embodiment of the present invention. Description is given taking an example of a configuration that receives a terrestrial digital broadcast as a digital broadcast wave and that reads a DVD as a recording medium.

The receiving unit 101 receives a program of a digital broadcast (step S201). A recording stored on a recording medium (DVD) is fetched (step S202). It is determined whether a recording having contents identical to that of the program of the digital broadcast is on the recording medium (DVD) (step S203). When a determination result indicates that a recording having contents identical to that of the program of the digital broadcast is on the recording medium (DVD) (step S203: YES), the video image signal and the audio signal each having the best quality are selected from the program of the digital broadcast and the recording medium (DVD) (step S204).

For example, when the video image signal having the best quality is that of the program of the digital broadcast, the selecting unit 105 selects the video image signal of the program from the accumulating unit 102. When the audio signal having the best quality is the audio signal of the recording medium (DVD), the selecting unit 105 selects the audio signal from the recording medium (DVD).

It is determined whether the selected video image signal and the selected audio signal are respectively from different input systems (step S205). When a determination result indicates that the selected video image signal and the selected audio signal are respectively from different input systems (step S205: YES), the synchronization control unit 106 synchronizes the video image signal and the audio signal respectively from the different input systems (step S206). The signals are reproduced and output as a video image and sound (step S207), and the processes above come to an end.

When a recording having contents identical to that of the program of the digital broadcast is not on the recording medium (DVD) as indicated by the result of the determination at step S203 (step S203: NO), either the video image signal and the audio signal of the program of the digital broadcast or the video image signal and the audio signal of the recording medium (DVD) are selected (step S210). The signals are reproduced and output as a video image and sound (step S207) and the processes above come to an end.

The selection at step S210 is selection involving the use of only the signals (the video image signal and the audio signal) of the input system of the digital broadcast or only the signals (the video image signal and the audio signal) of the input system of the recording medium (DVD). In this case, no reproduction involving a combination of a signal of the digital broadcasting and a signal of the recording medium (DVD) is executed.

When the selected video image signal and the selected audio signal are not respectively from different input systems as indicated by the result of the determination at step S205 (step S205: NO), reproduction and output using the video image signal and the audio signal from the same input system is executed (step S207) and the processes above come to an end.

As described above, according to the embodiment, a video image signal and an audio signal, respectively from different input systems, can be selected from among the video image signal and the audio signal of a digital broadcast, and the video image signal and the audio signal of a recording medium such as a DVD and reproduced as a video image and sound. For example, a high quality video image signal of a digital broadcast and a high quality audio signal of a recording medium such as a DVD can be combined and reproduced. Thereby, both the video image signal and the audio signal can be reproduced with high quality compared to reproduction that uses only one of the input systems.

Because the above processes concern configuration involving selecting for video image signal and audio signal quality, respectively, when both the video image signal and the audio signal from one of the input systems have a high quality, reproduction using the high quality video image signal and the high quality audio signal from the one input system can be executed in addition to the case where the signals are combined.

### Example

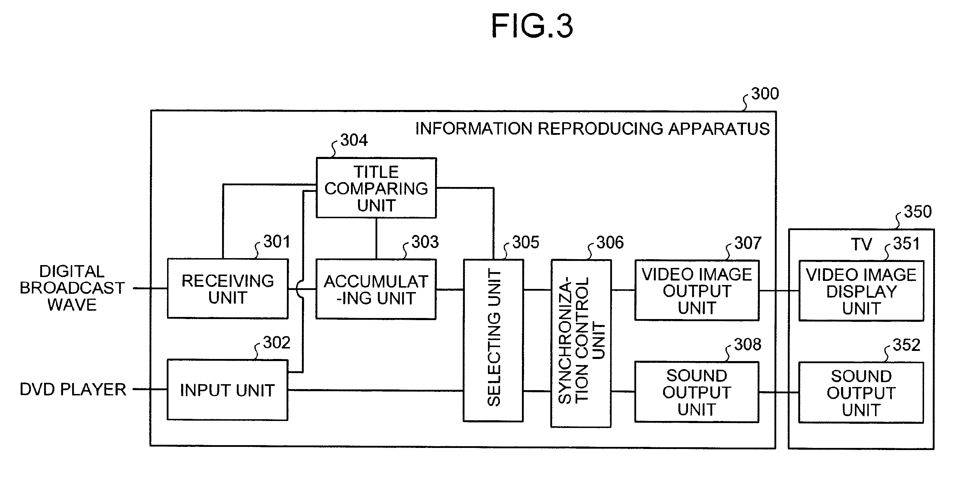

Fig. 3 is a block diagram of an information reproducing apparatus according to an example of the present invention. An information reproducing apparatus 300 includes a receiving unit 301 that receives a digital broadcast wave and outputs a video image signal and a audio signal of a program together with the title of the program, and a input unit 302 that is input with a video image signal and an audio signal stored on a recording medium such as, for example, a DVD and a title. More specifically, the input unit 302 is connected to an external video reproducing apparatus such as a DVD player.

The video image signal, the audio signal, and the title output from the receiving unit 301 are accumulated in an accumulating unit 303. In the example, the accumulating unit 303 accumulates therein the video image signal and the audio signal of at least one program (title). A recording medium, etc., such as a memory, a hard disc, a rewritable DVD disc, etc., can be used as the accumulating unit 303.

A title comparing unit 304 is input with the title of the program conveyed by the digital broadcast wave received by the receiving unit 301, and title of the recording on the DVD input through the input unit 302. The title of the program can be obtained by receiving, for example, an electronic program table (EPG), etc. The title comparing unit 304 compares the input title of the program with the title of the recording that is being played using the DVD, and the title comparing unit 304 outputs the comparison result to a synchronization control unit 306. The title comparing unit 304 can be configured by executing a control program for the title comparison using a microprocessor including a CPU, a ROM, a RAM, etc.

When the result of the comparison by the title comparing unit 304 is the determination that the titles are identical, a selecting unit 305 selects either the video image signal of the program accumulated in the accumulating unit 303 or the video image signal of the DVD input into the input unit 302 and the selecting unit 305 outputs the selected video image signal to the synchronization control unit 306. The selecting unit 305 also selects either the audio signal of the program accumulated in the accumulating unit 303 or the audio signal of the DVD input to the input unit 302. The selecting unit 305 outputs the selected audio signal to the synchronization control unit 306. This selection is adapted to select giving priority to the video image signal having a good video image quality for reproduction (for example, having a high video frame rate), and the audio signal having a good audio quality for reproduction (for example, having a high audio rate).

The synchronization control unit 306 outputs the video image signal and the audio signal selected by the selecting unit 305 synchronizing the signals with each other. In particular, the synchronization control unit 306 synchronizes the video image signal with the audio signal when the signals are respectively from different inputs. More specifically, the synchronization control unit 306 synchronizes the video image signal of the program of the digital broadcast wave with the audio signal of the recording played by the DVD player as the selected signals. In this case, the synchronization control unit 306 synchronizes (video-frame-synchronizes) the audio signal input to the input unit 302 with the video image signal of the program accumulated in the accumulating unit 303. The video image signal is output to an external unit from a video image output unit 307, and the audio signal synchronized with the video image signal is output to an external unit from an audio output unit 308.

1. An example in which synchronization is required··· A high quality video image signal of a program of a digital broadcast wave (HDTV) and a high quality audio signal output by a DVD player (for example, DTS).
2. An example in which no synchronization is required... The video image signal and the audio signal of the same medium. For example, the video image signal and the audio signal of a program of a digital broadcast wave; further, the video image signal and the audio signal output by a DVD player.
   In this example, no combination of a low quality video image signal (for example, SDTV) and a low quality audio signal (AAC) is selected. However, when only low quality signals are available, a video image signal and an audio signal of a low quality may be selected according to a priority designated with respect to quality.

The video image signal and the audio signal may be output to the same unit, a television (TV) 350. The television 350 includes a video image displaying unit (monitor) 351 that displays video images of the video image signal and an audio output unit 352, such as an amplifier, a speaker, etc., that outputs the audio signal as audio. Not limited to the above, configuration may also be such that the video image signal is output to the television 350, while the audio signal is output to an amplifier of an audio system. Further, configuration may be such that the audio signal is output from a speaker connected to the amplifier. Not limited to an audio system, the video image signal and the audio signal may also be output to an AV amplifier, etc.

In the description above, the information reproducing apparatus 300 is configured to have an externally disposed video image reproducing apparatus such as a separate DVD player. However, the information reproducing apparatus 300 may also be configured to include an internal DVD playing unit.

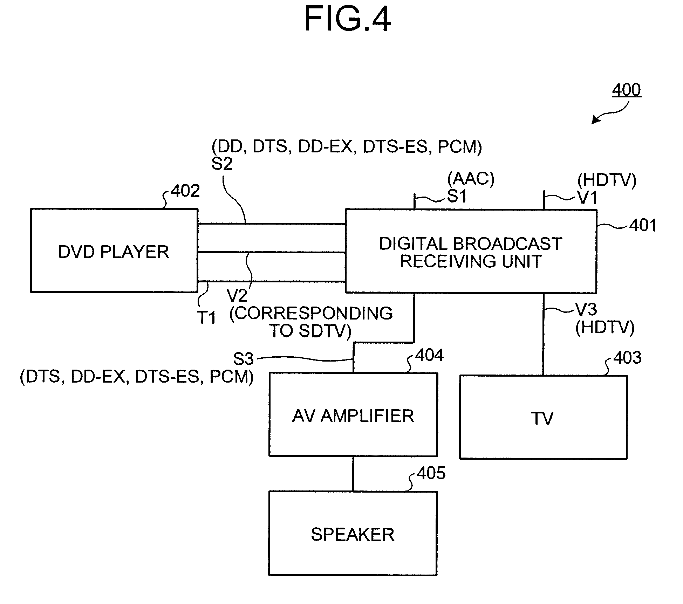

Fig. 4 is a block diagram of the entire configuration of an information reproducing system including an information reproducing apparatus. An information reproducing system 400 includes a digital broadcast receiving unit 401, a DVD player 402, and a TV 403. In the example shown, configuration is adapted to output an audio signal from a speaker 405 through an AV amplifier 404 to reproduce the audio signal with a higher quality.

The digital broadcast receiving unit 401 corresponds to the information reproducing apparatus 300 described with reference to Fig. 3. The digital broadcast receiving unit 401 receives a digital broadcast wave and outputs a video image signal V1 and an audio signal S1. The digital broadcast receiving unit 401 is connected to a DVD player 402 and the digital broadcast receiving unit 401 is input with a video image signal V2, an audio signal S2, and title information T1 from the DVD player 402.

The digital broadcast receiving unit 401 selectively outputs high quality signals from among the video image signals V1, V2 and the audio signals S1, S2 (the selecting unit 305 of Fig. 3). In this case, it is assumed that the video image signal V1 of the received digital broadcast wave is of HDTV and the audio signal S1 thereof is of AAC. It is also assumed that the video image signal V2 input from the DVD player 402 corresponds to SDTV and the audio signal S2 input therefrom is of DD, DTS, DD-EX, DTS-ES, or PCM.

In this case, the digital broadcast receiving unit 401 selects from among the video signals V1, V2, the video image signal V1 (HDTV) having an excellent quality and the digital broadcast receiving unit 401 outputs the selected signal to the TV 403 as a video image signal V3. The digital broadcast receiving unit 401 also selects from among the audio signals S1, S2, the audio signal S2 having an excellent quality, where the audio signal S2 excludes the DD-type having a quality that corresponds to the AAC-type and may be any one of other audio signal types (i.e., DTS, DD-EX, DTS-ES, and PCM) and the digital broadcast receiving unit 401 outputs the selected signal to the AV amplifier 404 as an audio signal S3.

In the exemplary configuration shown in Fig. 4, the digital broadcast receiving unit 401 is configured to be input with all of the video image signals V1, V2 and the audio signals S1, S2 and the digital broadcast receiving unit 401 is also configured to output the video image signal V3 and the audio signal S3. Not limited to this configuration, the DVD player 402 may be connected to the AV amplifier 404 and the DVD player 402 may also be configured to directly output the audio signal S2 from the DVD player 402 to the AV amplifier 404.

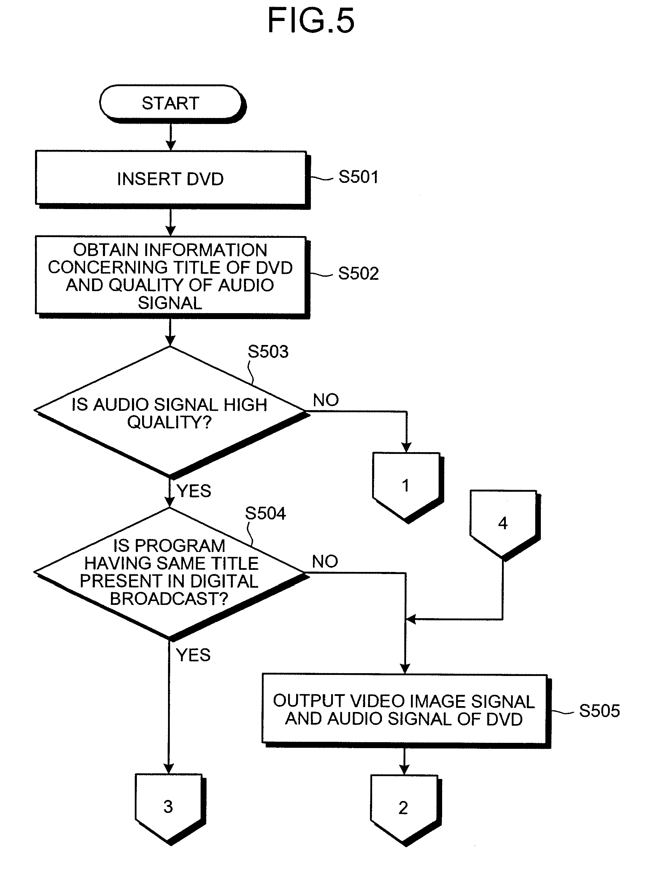

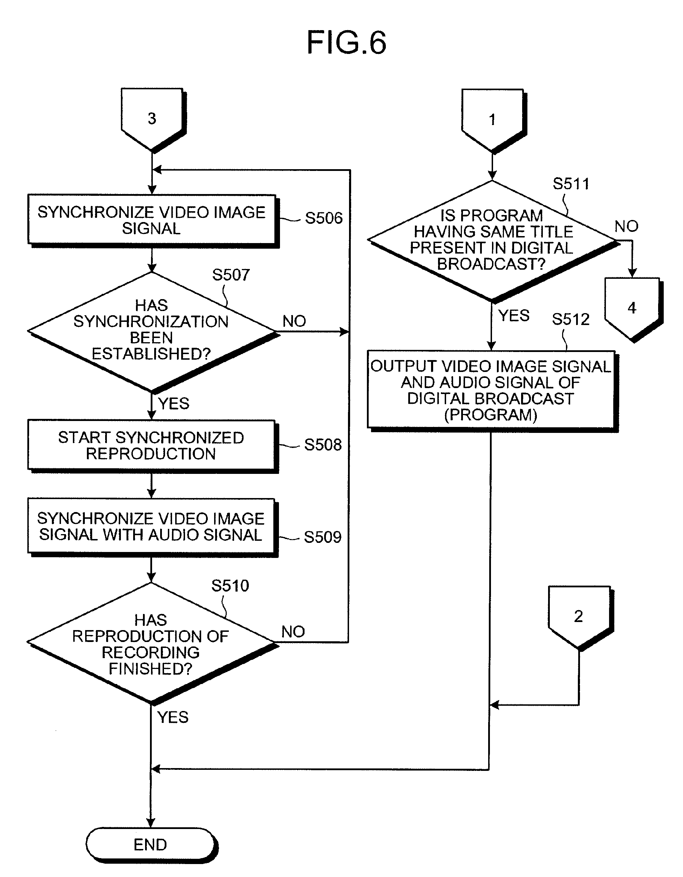

Figs. 5 and 6 respectively are flowcharts of processes of the information reproducing apparatus according to the example of the present invention. Description is given for the flowcharts correlating the flowcharts with the configurations shown in Figs. 3 and 4. A DVD is inserted into the DVD player 402 (step S501). Triggered by this insertion of the DVD, the DVD player 402 starts searching for a title and obtains information concerning the quality of the audio signal (step S502).

The title comparing unit 304 determines whether the obtained information concerning the quality of the audio signal indicates high audio quality (step S503). When the information indicates high audio quality as the result of the determination (step S503: YES), the title comparing unit 304 determines whether a program having the same title is present in the digital broadcast (step S504). On the other hand, when the information does not indicate a high audio quality (step S503: NO), the procedure advances to step S511.

When a program having the same title is present in the digital broadcast as the result of the determination at step S504 (step S504: YES), a process of synchronizing the video image signal of the program of the digital broadcast with the audio signal of the recording on the DVD is executed (steps S506 to S510). On the other hand, when no program having the same title is present in the digital broadcast (step S504: NO), the video image signal and the audio signal of the DVD are output because the video image signal of the program of the digital broadcast can not be obtained (step S505). In this case, the selecting unit 305 selects the video image signal and the audio signal of the DVD, the video image output unit 307 outputs the video image signal of the DVD, the audio output unit 308 outputs the audio signal of the DVD, and the processes above come to an end.

In the process of synchronizing the video image signal of the program of the digital broadcast with the audio signal of the recording on the DVD, synchronization (video-frame synchronization) of the video image signal of the program of the digital broadcast is executed (step S506). Whether the synchronization of the video image signal of the program has been established is determined (step S507). When the synchronization of the video image signal of the program is established (step S507: YES), synchronized reproduction is started (step S508). However, when the synchronization of the video image signal of the program can not be established (step S507: NO), the process of synchronization of the video image signal at step S506 is repeated.

The start of the synchronization at step S508 refers to synchronizing the video image signal of the program of the digital broadcast with the audio signal of the recording on the DVD, which are from sources different from each other. The video image signal of the program of the digital broadcast is output from the video image output unit 307, and the audio signal of the recording on the DVD is output from the audio output unit 308. In this case, the synchronization control unit 306 synchronizes the video image signal of the program of the digital broadcast with the audio signal of the recording on the DVD (step S509). In this case, though the reproduction uses sources respectively input from different input systems, high quality reproduction of the program (recording) using a high quality video image signal and a high quality audio signal without any lag between the video image signal and the audio signal can be realized.

This synchronization is not limited to synchronization using a selected video image signal and a selected audio signal, and by comparing corresponding video image signals or corresponding audio signals respectively from different input systems, it can be determined whether the signals synchronize with each other. For example, whether the video image signal of a program and the audio signal of a recording coincide can be determined by determining whether the video image signal of the program and the video image signal of a DVD coincide.

Not limited to the above, whether the video image signal of a program and the audio signal of a recording coincide can be determined by determining whether the audio signal of the program and the audio signal of a DVD coincide. Configuration may be such that not only the coincidence of the video image signal of a program and the video image signal of a DVD but also the coincidence of the audio signal of the program and the audio signal of the DVD to determine that the video image signal of the program and the audio signal of a recording coincide. When this determination of the coincidence is executed, the video image signal or the audio signal of a program accumulated in the accumulating unit 303 is read in advance and, thereby, whether this signal coincides with the video image signal or the audio signal of a DVD can be determined. The video image signal or the audio signal of a DVD may be used for comparison to check for coincidence by reading the signal in advance for a predetermined time period.

It is determined whether the reproduction of the recording on the inserted DVD has finished (step S510). When the reproduction of the recording on the DVD has not finished (step S510: NO), the procedure returns to step S506 and the reproduction of the program (recording) continues while the above process of synchronizing is repeatedly executed. When the reproduction of the recording on the DVD has finished (step S510: YES), all of the processes come to an end.

When the information concerning the quality of the audio signal obtained at the above step S503 indicates no high quality (step S503: NO), it is determined whether a program having the same title is present in the digital broadcast (step S511). When a program having the same title is present in the digital broadcast as the result of the determination at step S511 (step S511: YES), the video image signal and the audio signal of the program of the digital broadcast are output (step S512). At this time, the selecting unit 305 selects the video image signal and the audio signal of the program of the digital broadcast. The video image output unit 307 outputs the video image signal of the digital broadcast and the audio output unit 308 outputs the audio signal of the digital broadcast. The processes above come to an end.

When the process at step 512 is executed, no reproduction of the recording on the DVD is executed. Therefore, reading of the DVD can be ended. Compared to reproduction of the recording using only the DVD, the audio signal has the same quality as that obtained in reproduction of the DVD. However, reproduction using the high quality video image signal (HDTV) of the digital broadcasting is enabled.

On the other hand, when no program having the same title is present in the digital broadcast (step S511: NO), no video image signal of the program of the digital broadcast can be obtained and, therefore, the procedure returns to step S505 and the video image signal and the audio signal of the DVD are output. At this time, the selecting unit 305 selects the video image signal and the audio signal of the DVD. The video image output unit 307 outputs the video image signal of the DVD and the audio output unit 308 outputs the audio signal of the DVD. The processes above come to an end.

Commercial messages (CMs) may be included in a program received using the digital broadcast. The synchronization control unit 306 may cause the reproduction of the DVD to temporarily stop during the commercial messages. When the program of the digital broadcast is temporarily discontinued and a commercial message starts, the video image signal and the audio signal of the DVD each for a predetermined time period are captured by reading the reproduction of the DVD in advance. When the commercial message ends and the program is restarted, the reproduction of the DVD is synchronized with and is caused to start from the position that coincides with that of the video image signal or the audio signal read in advance.

The above processes have been described for the processes of retrieving a program having the same title from a digital broadcast triggered by the playing of a DVD. Not limited to this, the processes may be adapted to retrieve a recording on the DVD triggered by a viewing of a program of a digital broadcast. A retrieval screen may be adapted to be displayed on a display screen for the video image signal and to prompt a user to insert a DVD having the same title.

According to the above example, during the reproduction of the DVD, the high quality audio signal of the DVD is used and, when a program identical to the recording is digitally broadcasted, the high quality video image signal of the program is used. Therefore, reproduction using a high quality audio signal and a high quality video image signal is enabled.

In the above example, when the digital broadcast and the reproduction of the DVD are synchronized with each other, description has been given on the premise that the quality of the video image signal of the digital broadcast is high and the quality of the audio signal of the DVD is high. However, in the future, it can be considered that the quality of the audio signal of digital broadcast is high and the quality of the video image signal of a DVD is high. In such a case, according to the above example, the highest quality video image signal and the highest quality audio signal can be combined and reproduced.

The above example is adapted to store one entire program of the digital broadcast in the accumulating unit 303, and the processes shown in Figs. 5 and 6 are adapted to be started after the entire program of the digital broadcast has been stored. Not limited to this, configuration may be such that an HDD, etc., is adopted as the accumulating unit 303, whereby a concurrent recording and reproducing function enables accumulation of a digitally broadcasted program to begin when the broadcast of the program starts and while the program is being accumulated, synchronization of the program with the DVD and reproduction are executed simultaneously. When configuration is such that the accumulating unit 303 accumulates plural programs, plural broadcasted programs are accumulated in advance and when an arbitrary program among the programs accumulated is read from the accumulating unit 303 for reproduction, the program may be synchronized with a DVD and reproduced.

The information reproducing method explained in the present embodiment can be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program can be a transmission medium that can be distributed through a network such as the Internet.

## Claims

1. An information reproducing apparatus comprising:
a receiving unit that receives a video image signal, an audio signal, and a title of a program of a broadcast wave;
an input unit that is input with a video image signal, an audio signal, and a title of a recording stored on a recording medium;
a comparing unit that compares the title of the program with the title of the recording to determine whether the title of the program and the title of the recording are identical;
a selecting unit that, when a comparison result by the comparing unit indicates that the title of the program and the title of the recording are identical, respectively selects a video image signal of a high quality and an audio signal of a high quality from among the video image signal and the audio signal received by the receiving unit and the video image signal and the audio signal input to the input unit; and
a synchronization control unit that synchronizes the video image signal and the audio signal selected by the selecting unit.

2. The information reproducing apparatus according to claim 1, further comprising,
an accumulating unit that accumulates one or more programs of the broadcast wave, wherein
the selecting unit respectively selects a video image signal of a high quality and an audio signal of a high quality from video image signals and audio signals accumulated in the accumulating unit and the video image signal and the audio signal input to the input unit.

3. The information reproducing apparatus according to claim 1 or 2, wherein
the synchronization control unit, when the video image signal and the audio signal selected by the selecting unit are a combination of a signal obtained by receiving the broadcast wave and a signal obtained by reading the recording medium, synchronizes the video image signal selected and the audio signal selected that are respectively from different input systems.

4. An information reproducing method comprising:
a receiving step of receiving a video image signal, an audio signal, and a title of a program of a broadcast wave;
an inputting step of inputting a video image signal, an audio signal, and a title of a recording stored on a recording medium;
a comparing step of comparing the title of the program with the title of the recording to determine whether the title of the program and the title of the recording are identical;
a selecting step of respectively selecting, when a comparison result at the comparing step indicates that the title of the program and the title of the recording are identical, a video image signal of a high quality and an audio signal of a high quality from among the video image signal and the audio signal received at the receiving step and the video image signal and the audio signal input at the inputting step; and
a synchronization control step of synchronizing the video image signal and the audio signal selected at the selecting step.

5. An information reproducing computer-program causing a computer to execute the information reproducing method according to claim 4.

6. A computer-readable recording medium storing therein the information reproducing computer-program according to claim 5.
